# EUROPÄISCHE PATENTSCHRIFT

(11) **EP 4 204 246 B1**
(45) Veröffentlichungstag und Bekanntmachung des Hinweises auf die Patenterteilung: **20.12.2023**
(21) Anmeldenummer: 22733967.8
(22) Anmeldetag: 20.06.2022
(51) Int. Cl.: B60K 1/00, B60K 11/02

(54) **ANTRIEBSVORRICHTUNG FÜR EINE ELEKTRIFIZIERTE FAHRZEUGACHSE**
DRIVE DEVICE FOR AN ELECTRIFIED VEHICLE AXLE
DISPOSITIF D'ENTRAÎNEMENT POUR ESSIEU DE VÉHICULE ÉLECTRIFIÉ

(30) Priorität: 02.07.2021 DE 102021117059
(43) Veröffentlichungstag der Anmeldung: 05.07.2023
(73) Patentinhaber: Audi AG, 85045 Ingolstadt (DE)
(72) Erfinder: GLOEDE, Harald, 85104 Pförring (DE)
(74) Vertreter: Massinger, Marco
(86) Internationale Anmeldenummer: PCT/EP2022/066646
(87) Internationale Veröffentlichungsnummer: WO 2023/274758

(56) Entgegenhaltungen:
- EP-A1- 1 503 088
- EP-A2- 1 414 134
- WO-A1-2019/238343
- CN-U- 212 677 022
- DE-A1-102016 222 094
- DE-A1-102018 106 799

## Beschreibung

Die Erfindung betrifft eine Antriebsvorrichtung für eine elektrifizierte Fahrzeugachse eines Fahrzeugs nach dem Oberbegriff des Anspruches 1.

Eine elektrifizierte Fahrzeugachse eines zumindest teilweise elektrisch betriebenen, zweispurigen Fahrzeugs kann eine Elektromaschine aufweisen, die über ein Getriebe auf Abtriebswellen abtreibt, die zu Fahrzeugrädern der Fahrzeugachse führen. Zudem ist ein Ölmodul vorgesehen, das die Elektromaschine und/oder das Getriebe mit Öl versorgt.

In einer gattungsgemäßen Antriebsvorrichtung sind die Elektromaschine, das Getriebe sowie das Ölmodul zu einer rahmenförmigen, schwingungssteifen Baueinheit zusammengefügt. In dieser Baueinheit sind die Elektromaschine und das Ölmodul zueinander axial beabstandet am Getriebe angeflanscht. Zudem weist die Elektromaschine an ihrer, dem Getriebe axial gegenüberliegenden Seite einen radial abragenden Ausleger auf, der einen Achsabstand zum Ölmodul überbrückt. An seinem freien Ausleger-Ende ist der Ausleger über Schraubstellen kraftübertragend an dem Ölmodul angebunden. Auf diese Weise können betriebsbedingte Schwingungen in der rahmenförmigen Baueinheit reduziert werden.

Aus der DE 10 2004 014 787 A1 ist ein Ölmodul bekannt. Aus der DE 197 39 668 A1 ist ein Ölpumpenmodul bekannt. Aus der DE 10 2017 004 778 A1 ist eine toleranzausgleichende Verbindungsanordnung bekannt.

Die Aufgabe der Erfindung besteht darin, eine Antriebsvorrichtung bereitzustellen, bei der in einfacher Weise ein Zusammenbau im Wesentlichen frei von Bauteil-Verformungen ermöglicht ist.

Die Aufgabe ist durch die Merkmale des Anspruches 1 gelöst. Bevorzugte Weiterbildungen der Erfindung sind in den Unteransprüchen offenbart.

Die Erfindung geht von einer Antriebsvorrichtung für eine elektrifizierte Fahrzeugachse aus, die eine Elektromaschine, ein Getriebe sowie ein Kühl- und/oder Schmiermittel-Modul aufweist, das die Elektromaschine und/oder das Getriebe mit Kühl- und/oder Schmiermittel versorgt. Die Elektromaschine, das Getriebe und das Modul sind zu einer schwingungssteifen, rahmenförmigen Baueinheit zusammengefügt. In der Baueinheit sind die Elektromaschine und das Kühl-/Schmiermittel-Modul zueinander axial beabstandet am Getriebe angeflanscht. Die Elektromaschine weist zudem an ihrer, dem Getriebe axial gegenüberliegenden Seite einen radial abragenden Ausleger auf. Dieser überbrückt einen Achsabstand zum Modul. Ein freies Ausleger-Ende ist über zumindest eine Schraubstelle kraftübertragend an dem Modul angebunden. Auf diese Weise können betriebsbedingte Schwingungen in der Baueinheit reduziert werden. Gemäß dem kennzeichnenden Teil des Anspruches 1 ist am Ausleger-Ende ein Anschlagelement bereitgestellt, das zwischen einer Nichtgebrauchsstellung und einer Stützstellung hubverstellbar ist. Das Anschlagelement ist in der Nichtgebrauchsstellung über einen freien Toleranzspalt von einer Modul-Stützfläche beabstandet. Auf diese Weise kann ein noch demontiertes Modul störkonturfrei mit der Baueinheit zusammengebaut werden. Vor dem Festspannen der Schraubstelle kann das Anschlagelement unter Aufbrauch des Toleranzspalts bis in Anlage mit der Modul-Stützfläche hubverstellt werden. Anschließend folgt ein Schraubprozess, bei dem das Ausleger-Ende und das Modul frei von toleranzbedingten Bauteil-Verformungen miteinander verspannt werden können.

In einer technischen Umsetzung kann die Schraubstelle einen Schraubbolzen aufweisen. Dieser ist durch ein Schraubloch des Ausleger-Endes führbar und mit seinem Bolzenschaft in Gewindeeingriff mit einer modulseitigen Innengewindebohrung bringbar. Im Hinblick auf eine bauraumgünstige Realisierung kann das Anschlagelement eine Anschlaghülse sein, die unmittelbar in der Schraubstelle integriert ist. In diesem Fall kann die Anschlaghülse einen gewindefreien Innenumfang sowie einen Außenumfang mit Außengewinde aufweisen. Die Anschlaghülse kann über ihr Außengewinde in Gewindeeingriff mit einem Innengewinde des Ausleger-Endes gebracht werden. Für eine kompakte Ausführung ist es bevorzugt, wenn die Anschlaghülse mit einem Innengewinde im Schraubloch des Ausleger-Endes in Gewindeeingriff bringbar ist. Zur Hubverstellung wird die Anschlaghülse vom Werker schraubbetätigt.

In einer bauraumgünstigen Ausführungsform kann der Bolzenschaft des Schraubbolzens unmittelbar durch die Anschlaghülse geführt werden. In der Stützstellung kann die Anschlaghülse mit ihrer Stirnseite bis in Anlage mit einem Öffnungsrandbereich der modulseitigen Innengewindebohrung gebracht sein. In diesem Fall bildet der Öffnungsrandbereich der modulseitigen Innengewindebohrung die Modul-Stützfläche, gegenüber der die Anschlaghülse in ihrer Stützstellung abgestützt ist.

Im festgespannten Zustand kann das Ausleger-Ende mitsamt Anschlaghülse zwischen dem Bolzenkopf des Schraubbolzens und dem Öffnungsrandbereich der modulseitigen Innengewindebohrung abgestützt sein. In einer ersten Variante kann der Bolzenkopf unmittelbar auf der vom Modul abgewandten Anschlaghülsen-Stirnseite abgestützt sein. Alternativ dazu kann der Bolzenkopf unabhängig von der Anschlaghülse auf dem Öffnungsrandbereich des Schraubloches des Ausleger-Endes abgestützt sein.

Eine einfache Montagebetätigung der Anschlaghülse ist im Hinblick auf eine reduzierte Prozessdauer im Zusammenbauvorgang von Bedeutung. Vor diesem Hintergrund kann die Anschlaghülse an ihrer, von dem Modul abgewandten Stirnseite einen Werkzeugansatz aufweisen, über den die Anschlaghülse mit Hilfe eines Werkzeugs schraubbetätigbar ist. Zur weiteren Vereinfachung des Montagevorgangs kann der Werkzeugansatz der Anschlaghülse sowie ein Werkzeugansatz des Schraubbolzens im Wesentlichen gleich ausgeführt sein. Auf diese Weise kann die Anschlaghülse und der Schraubbolzen mit gleichem Werkzeug betätigbar sein.

In einer technischen Umsetzung kann die Schraubstelle achsparallel zur Elektromaschinen-Achse bzw. zur Modul-Achse ausgerichtet sein. Zur weiteren Reduzierung von betriebsbedingten Schwingungen kann das Ausleger-Ende über zumindest zweite Schraubstelle mit dem Modul verbunden werden. Deren Schraubachse kann rechtwinklig zur Schraubachse der ersten Schraubstelle ausgerichtet sein.

Die zweite Schraubstelle kann einen Schraubbolzen aufweisen, der durch ein Schraubloch des Ausleger-Endes führbar ist und mit seinem Bolzenschaft in Gewindeeingriff mit einer modulseitigen Innengewindebohrung bringbar ist. Mittels der zweiten Schraubstelle können insbesondere Querschwingungen, das heißt Schwingungen quer zur Achsrichtung der Schraubachse der zweiten Schraubstelle, blockiert werden. Hierzu kann die Schraubstelle wie folgt aufgebaut sein: So kann in das Schraubloch des Ausleger-Endes eine Ausgleichhülse mit geringem Lochspiel eingesetzt sein. Deren Hülsenlänge kann größer bemessen sein als die Schraubloch-Länge des Ausleger-Endes. Auf diese Weise stützt sich im festgespannten Zustand die Ausgleichshülse zwischen dem Bolzenkopf und dem Öffnungsrandbereich der modulseitigen Innengewindebohrung ab. Zudem ist das Ausleger-Ende in Gleitkontakt mit dem Ausgleichhülsen-Außenumfang in Achsrichtung verstellbar gelagert. Aufgrund des geringen Lochspiels zwischen der Ausgleichhülse und dem Schraubloch sind Querschwingungen quer zur Achsrichtung weitgehend blockiert.

In einem Zusammenbauprozess wird zunächst die Elektromaschine in Flanschverbindung mit dem Getriebe gebracht. Dabei bildet sich ein ausreichend großer Montagefreigang zwischen dem Ausleger-Ende der Elektromaschine und dem Getriebe. In einem ersten Prozessschritt wird das Modul störkonturfrei in diesen Montagefreigang eingeführt. Anschließend folgt ein zweiter Prozessschritt, in dem das Modul um einen Zustellhub in Axialrichtung bis in die Montageposition zugestellt wird, in der die Flanschverbindung zwischen dem Modul und dem Getriebe hergestellt wird. In einem weiteren dritten Prozessschritt wird das Ausleger-Ende an der Schraubstelle mit dem Modul verspannt.

Der Elektromaschine ist außerdem eine Leistungselektronik zugeordnet. Diese kann bauraumgünstig auf der Oberseite der rahmenförmigen Baueinheit angeordnet sein und den Innenraum der rahmenförmigen Baueinheit überspannen. In diesem Fall kann im Ausleger in Doppelfunktion zusätzlich ein Kontaktgehäuse für elektrische Versorgungsleitungen integriert sein. Mit Hilfe der elektrischen Versorgungsleitungen ist die Leistungselektronik mit der Elektromaschine elektrisch verbunden.

Nachfolgend ist ein Ausführungsbeispiel der Erfindung anhand der beigefügten Figuren beschrieben.

Es zeigen:
- Fig. 1: in einem grob schematischen Blockschaltdiagramm die Antriebsvorrichtung der Erfindung;
- Fig. 2: in einer perspektivischen Darstellung die Antriebsvorrichtung im zusammengebauten Zustand;
- Fig. 3 und 4: eine Schraubstelle in unterschiedlichen Betriebszuständen;
- Fig. 5: in einer Ansicht entsprechend der Fig. 3 eine Variante der Schraubstelle;
- Fig. 6: eine weitere Schraubstelle; und
- Fig. 7: in einer Ansicht entsprechend der Fig. 2 die Antriebsvorrichtung mit noch demontiertem Ölmodul.

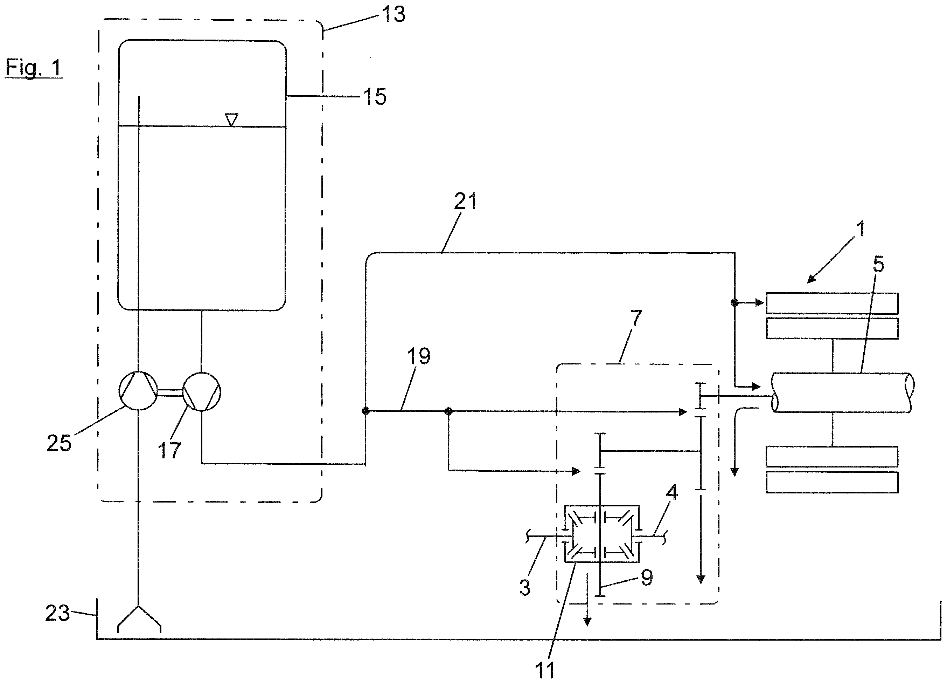

In der Figur 1 ist in einem vereinfachten Blockschaltdiagramm eine Antriebsvorrichtung für eine Fahrzeugachse eines zweispurigen Fahrzeugs gezeigt. Die Fahrzeugachse weist eine Elektromaschine 1 auf, die im Quereinbau achsparallel zu den, zu den Fahrzeugrädern geführten Antriebswellen 3, 4 angeordnet ist. Die Rotorwelle 5 der Elektromaschine 1 ist über ein Getriebe 7 in trieblicher Verbindung mit den beiden Antriebswellen 3, 4. In der Figur 1 weist das Getriebe 7 eine doppelte Stirnradstufe auf, die in trieblicher Verbindung mit einem eingangsseitigen Zahnrad 9 eines Achsdifferenzials 11 ist. Das Achsdifferenzial 11 treibt beidseitig auf die zu den Fahrzeugrädern geführten Antriebswellen 3, 4 ab. Zudem weist die Antriebsvorrichtung ein Ölmodul 13 auf, dessen Aufbau nachfolgend nur insoweit beschrieben ist, als es für das Verständnis der Erfindung erforderlich ist. Demzufolge weist das Ölmodul 13 einen Öltank 15 auf, der über eine Saugleitung mit einer Druckpumpe 17 verbunden ist. Von der Druckpumpe 17 führt eine Druckleitung bis zu einer Verzweigungsstelle, an der sich die Druckleitung in Versorgungsleitungen 19, 21 aufgabelt. Über die Versorgungsleitung 19 wird Öl zu Zahneingriffsstellen des Getriebes 7 geführt. Von dort tropft das Öl ab und sammelt sich in einem Schmierölsumpf 23. Über die Versorgungsleitung 21 wird das Öl in die Elektromaschine 1 geführt. Von dort fließt das Öl ebenfalls in Richtung Ölsumpf 23 ab. Das im Ölsumpf 23 gesammelte Öl wird mit Hilfe einer Rückführpumpe 25 zurück in den Öltank 15 geführt.

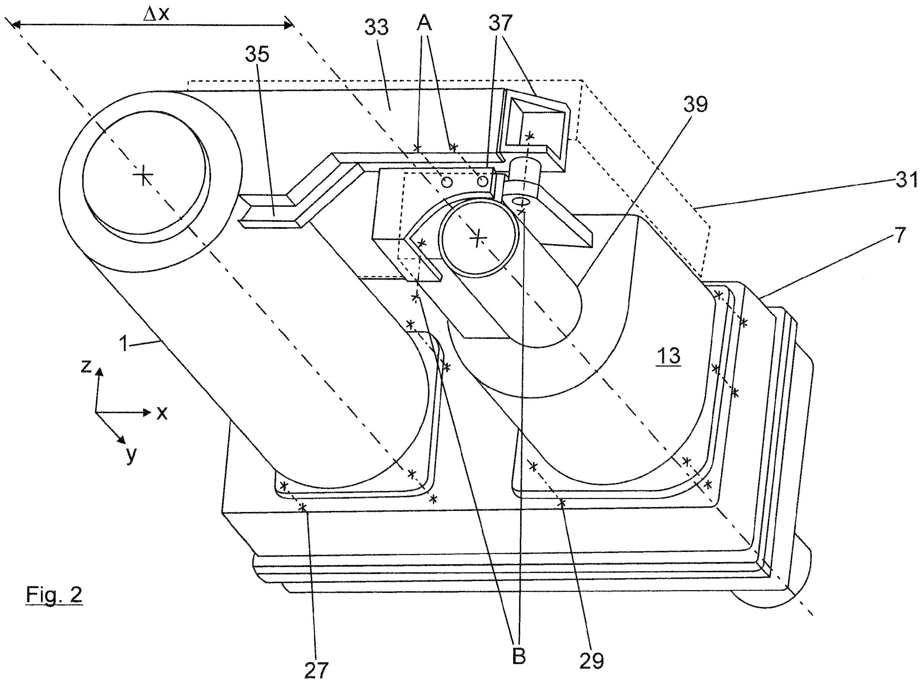

In der Figur 2 sind die Elektromaschine 1, das Getriebe 7 und das Ölmodul 13 zu einer rahmenförmigen Baueinheit zusammengefügt. In der Baueinheit sind die Elektromaschine 1 und das Ölmodul 13 zueinander über einen Axialabstand Δx beabstandet über Flanschverbindungen 27, 29 am Getriebe 7 angeflanscht. Der Elektromaschine 1 ist eine (mit gepunkteter Linie angedeutete) Leistungselektronik 31 zugeordnet. Diese befindet sich auf der Oberseite der rahmenförmigen Baueinheit und überspannt den Innenraum der rahmenförmigen Baueinheit. Die Leistungselektronik 31 ist mit der Elektromaschine 1 über elektrische Versorgungsleitungen verbunden, die in der Figur 2 innerhalb eines Kontaktgehäuses 33 verlaufen. Das Kontaktgehäuse 33 ist Bestandteil eines Auslegers 35, der auf der, dem Getriebe 7 axial gegenüberliegenden Elektromaschinen-Seite radial abragt.

Wie aus der Figur 2 hervorgeht, überbrückt der Ausleger 35 den Achsabstand Δx zum Ölmodul 13. Ein freies Ausleger-Ende 37 ist über insgesamt vier Schraubstellen A, B kraftübertragend am Ölmodul 13 angebunden, um betriebsbedingte Schwingungen in der Baueinheit zu reduzieren.

Wie aus der Figur 2 hervorgeht, sind die Schraubstellen in insgesamt zwei erste Schraubstellen A und zwei zweite Schraubstellen B aufgeteilt. Die Schraubachsen der ersten Schraubstellen A sind in der Hochrichtung z ausgerichtet. Die Schraubachsen der Schraubstellen B sind in der Achsrichtung der Elektromaschine 1 bzw. des Ölmoduls 13 ausgerichtet. In der Figur 2 weist das Ölmodul 13 eine Wellendurchführung 39 auf, durch die eine nicht gezeigte Antriebswelle 3, 4 bis zu dem jeweiligen Fahrzeugrad geführt ist.

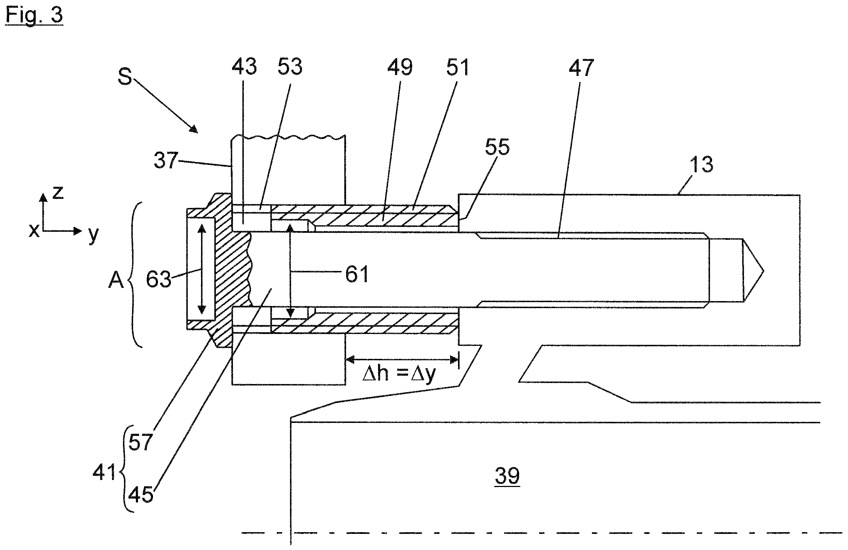

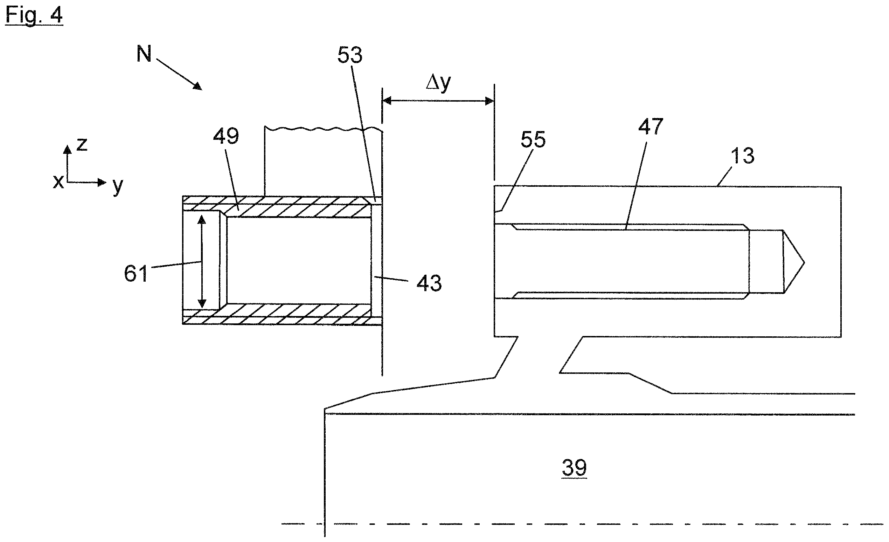

Nachfolgend ist anhand der Figur 3 der Aufbau einer der Schraubstellen A beschrieben. Demzufolge weist die Schraubstelle A einen Schraubbolzen 41 auf. Dieser ist durch ein Schraubloch 43 des Ausleger-Endes 37 geführt und mit seinem Bolzenschaft 45 in Gewindeeingriff mit einer modulseitigen Innengewindebohrung 47. Der Schraubstelle A ist ferner eine Anschlaghülse 49 zugeordnet. Diese weist einen gewindefreien Innenumfang sowie einen Außenumfang mit Außengewinde 51 auf. Die Anschlaghülse 49 ist über ihr Außengewinde 51 in Gewindeeingriff mit einem Innengewinde 53 des Schraubloches 43 des Ausleger-Endes 37. In der Figur 3 ist der Bolzenschaft 45 des Schraubbolzens 41 durch die Anschlaghülse 49 geführt. Durch Schraubbetätigung kann die Anschlaghülse 49 zwischen einer in der Figur 4 gezeigten Nichtgebrauchsstellung N und einer in der Figur 3 gezeigten Stützstellung S hubbetätigt werden. In der in der Figur 3 gezeigten Stützstellung S ist die Anschlaghülse 49 in Anlage mit einem Öffnungsrandbereich 55 der modulseitigen Innengewindebohrung 47. Der Bolzenkopf 57 des Schraubbolzens 41 ist in der Figur 3 auf dem Öffnungsrandbereich des Schraubloches 43 des Ausleger-Endes 37 abgestützt. Die Anschlaghülse 49 ragt mit einem Übermaß Δh aus dem Schraubloch 43 des Ausleger-Endes 37, mit dem Toleranzspalt Δy (Figur 4) zwischen dem Ausleger-Ende 37 und dem Ölmodul 13 überbrückt ist.

Die Anschlaghülse 49 weist an ihrer, von dem Ölmodul 13 abgewandten Stirnseite einen Werkzeugansatz 61 auf, über den die Anschlaghülse 49 schraubbetätigbar ist. Der Werkzeugansatz 61 der Anschlaghülse 49 sowie der Werkzeugansatz 63 des Schraubbolzens 41 sind im Wesentlichen gleich mit einem Innen-Mehrkant ausgebildet. Von daher sind sowohl die Anschlaghülse 49 als auch der Schraubbolzen 41 mit gleichem Werkzeug betätigbar.

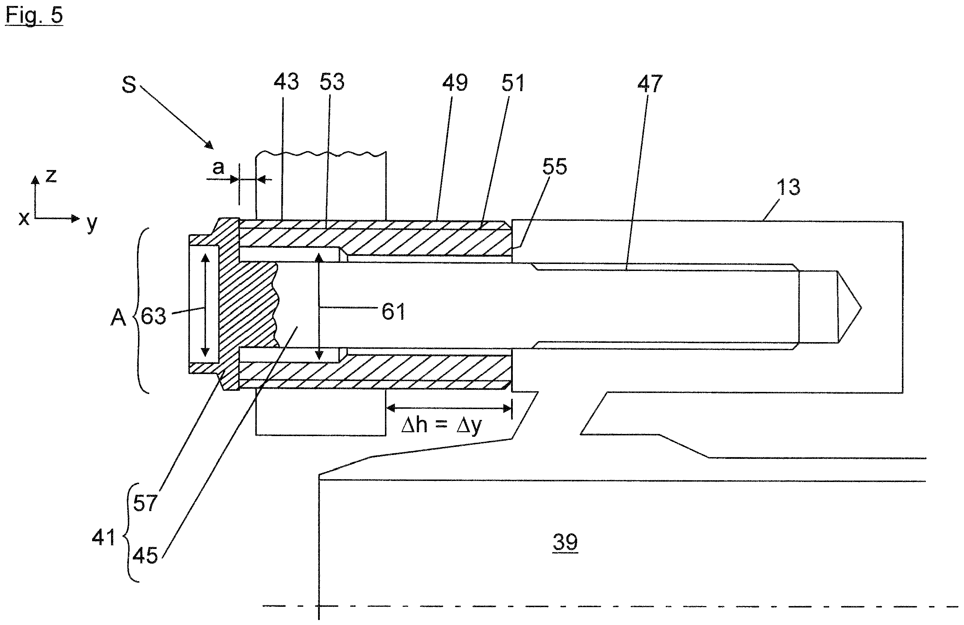

In der Figur 3 befindet sich die vom Öffnungsrandbereich 55 der modulseitigen Innengewindebohrung 47 abgewandte Stirnseite der Anschlaghülse 49 innerhalb des Schraubloches 43 des Ausleger-Endes 37. Von daher ist in der Figur 3 der Bolzenkopf 57 des Schraubbolzens 41 unmittelbar auf dem Öffnungsrandbereich des Schraubloches 43 des Ausleger-Endes 37 abgestützt. Alternativ dazu ist in der Figur 5 eine Variante der Schraubstelle A gezeigt, in der die vom Öffnungsrandbereich 55 der modulseitigen Innengewindebohrung 47 abgewandte Stirnseite der Anschlaghülse 49 das Ausleger-Ende 37 mit einem Überstand a überragt. In diesem Fall ist der Bolzenkopf 57 des Schraubbolzens 41 unmittelbar auf der Anschlaghülse 49 abgestützt.

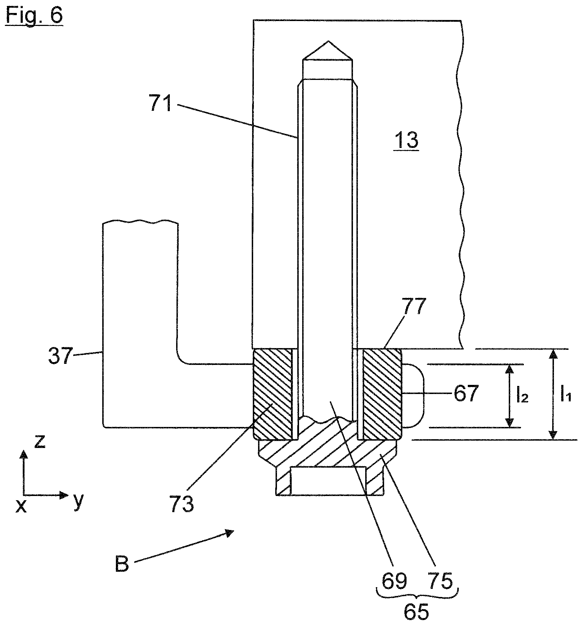

In der Figur 6 ist der Aufbau einer der zweiten Schraubstellen B gezeigt. Demnach weist die zweite Schraubstelle B einen Schraubbolzen 65 auf, der durch ein Schraubloch 67 des Ausleger-Endes 37 geführt ist und mit seinem Bolzenschaft 69 in Gewindeeingriff mit einer modulseitigen Innengewindebohrung 71 ist. In das Schraubloch 67 des Ausleger-Endes 37 ist eine Ausgleichhülse 73 mit geringem Lochspiel eingesetzt. Deren Hülsenlänge I₁ ist größer bemessen als die Schraubloch-Länge I₂ des Ausleger-Endes 37. In der Figur 6 ist ein festgespannter Zustand gezeigt, bei dem die Ausgleichshülse 73 zwischen dem Bolzenkopf 75 des Schraubbolzens 67 und einem Öffnungsrandbereich 77 der modulseitigen Innengewindebohrung 71 abgestützt ist. In diesem Fall ist das Ausleger-Ende 37 in Gleitkontakt mit dem glattzylindrischen Ausgleichshülsen-Außenumfang, so dass sich eine schwimmende Lagerung in Achsrichtung ergibt, jedoch Querschwingungen quer zur Achsrichtung weitgehend blockiert sind.

Sowohl der Außenumfang als auch der Innenumfang der Ausgleichshülse 73 sind glattzylindrisch bzw. gewindefrei realisiert- Der Schraubbolzen 65 erstreckt sich daher ohne Gewindeeingriff durch die Ausgleichshülse 73.

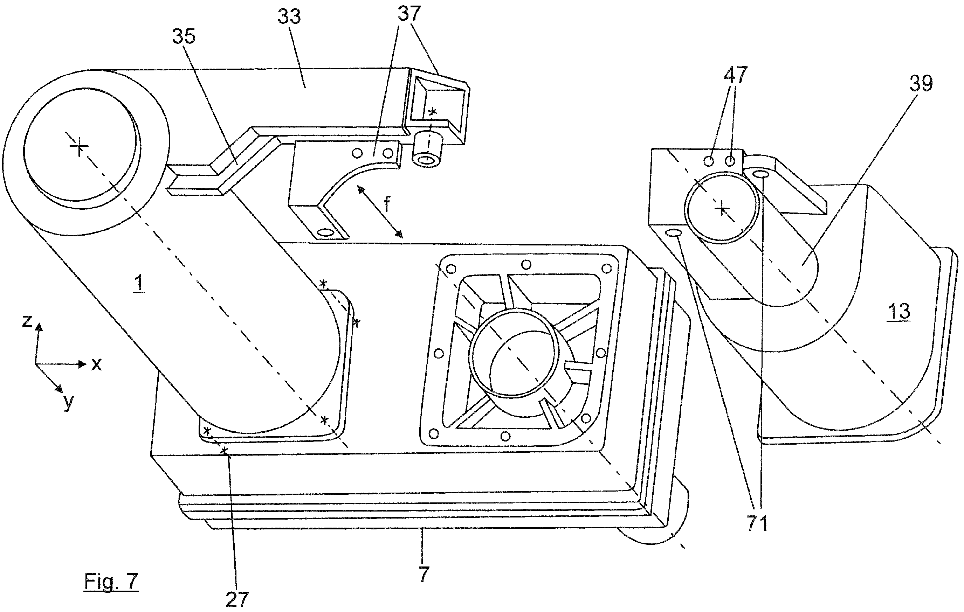

In der Figur 7 ist die Baueinheit mit noch demontiertem Ölmodul 13 gezeigt. Die Baueinheit weist einen Montagefreigang f zwischen dem Ausleger-Ende 37 und dem Getriebe 7 auf. In einem ersten Prozessschritt wird das Ölmodul 13 störkonturfrei in einer Montagerichtung x in den Montagefreigang f eingeführt. Anschließend folgt ein zweiter Prozessschritt, bei dem das Ölmodul 13 um einen Zustellhub in Axialrichtung y bis in eine Montageposition zugestellt wird. In der Montageposition kann die Flanschverbindung 29 zwischen dem Ölmodul 13 und dem Getriebe 7 hergestellt werden. In einem abschließenden dritten Prozessschritt wird das Ausleger-Ende 37 an den Schraubstellen A, B mit dem Ölmodul 13 verspannt. Vor Durchführung des Spannvorgangs wird die Anschlaghülse 49 in Anlage mit dem Öffnungsrandbereich 55 der modulseitigen Innengewindebohrung 47 gebracht (siehe Figur 3).

### BEZUGSZEICHENLISTE:

- 1: Elektromaschine
- 3, 4: Antriebswellen
- 5: Rotorwelle
- 7: Getriebe
- 9: Eingangszahnrad
- 11: Achsdifferenzial
- 13: Ölmodul
- 15: Öltank
- 17: Druckpumpe
- 19, 21: Versorgungsleitungen
- 23: Ölsumpf
- 25: Rücklaufpumpe
- 27, 29: Flanschverbindungen
- 31: Leistungselektronik
- 33: Kontaktgehäuse
- 35: Ausleger
- 37: Ausleger-Ende
- 39: Wellendurchführung
- 41: Schraubbolzen
- 43: Schraubloch
- 45: Bolzenschaft
- 47: modulseitige Innengewindebohrung
- 49: Anschlaghülse
- 51: Außengewinde
- 53: Schraubloch-Innengewinde
- 55: Öffnungsrandbereich
- 57: Bolzenkopf
- 61, 63: Werkzeugansätze
- 65: Schraubbolzen
- 67: Schraubloch
- 69: Bolzenschaft
- 71: modulseitige Innengewindebohrung
- 73: Ausgleichhülse
- 75: Bolzenkopf
- 77: Öffnungsrandbereich
- Δx: Achsabstand
- Δh: Übermaß
- Δy: Toleranzspalt
- f: Montagefreigang
- I₁: Hülsen-Länge
- I₂: Schraubloch-Länge
- N: Nichtgebrauchsstellung
- S: Stützstellung
- A, B: Schraubstellen
- a: Überstand

## Patentansprüche

1. Antriebsvorrichtung für eine elektrifizierte Fahrzeugachse eines Fahrzeugs, mit einer Elektromaschine (1), die über ein Getriebe (7) auf Antriebswellen (3, 4) abtreibt, die zu Fahrzeugrädern der Fahrzeugachse führen, und mit einem Kühl- und/oder Schmiermittel-Modul (13), das die Elektromaschine (1) und/oder das Getriebe (7) mit Kühl- und/oder Schmiermittel versorgt, wobei die Elektromaschine (1), das Getriebe (7) und das Modul (13) zu einer Baueinheit zusammengefügt sind, in der die Elektromaschine (1) und das Kühl-/Schmiermittel-Modul (13) zueinander axial beabstandet am Getriebe (7) angeflanscht sind, und wobei die Elektromaschine (1) an ihrer dem Getriebe (7) axial gegenüberliegenden Seite einen radial abragenden Ausleger (35) aufweist, der einen Achsabstand (Δx) zum Kühl-/Schmiermittel-Modul (13) überbrückt und der an seinem freien Ausleger-Ende (37) über zumindest eine Schraubstelle (A) kraftübertragend an dem Kühl-/Schmiermittel-Modul (13) angebunden ist, insbesondere um betriebsbedingte Schwingungen in der Baueinheit zu reduzieren,
**dadurch gekennzeichnet,**
**dass** am Ausleger-Ende (37) ein zwischen einer Nichtgebrauchsstellung (N) und einer Stützstellung (S) hubverstellbares Anschlagelement (49) bereitgestellt ist, und dass insbesondere das Anschlagelement (49) in der Nichtgebrauchsstellung (N) über einen freien Toleranzspalt von einem Öffnungsrandbereich (55) beabstandet ist, und dass insbesondere vor dem Festspannen der Schraubstelle (A) das Anschlagelement (49) unter Aufbrauch des Toleranzspalts bis in Anlage mit dem Öffnungsrandbereich (55) hubverstellbar ist, so dass das Ausleger-Ende (37) und das Modul (13) frei von toleranzbedingten Bauteil-Verformungen miteinander verspannbar sind.

2. Antriebsvorrichtung nach Anspruch 1, **dadurch gekennzeichnet, dass** die Schraubstelle (A) einen Schraubbolzen (41) aufweist, der durch ein Schraubloch (43) des Ausleger-Endes (37) führbar ist und mit seinem Bolzenschaft (45) in Gewindeeingriff mit einer modulseitigen Innengewindebohrung (47) bringbar ist.

3. Antriebsvorrichtung nach Anspruch 2, **dadurch gekennzeichnet, dass** das Anschlagelement (49) eine Anschlaghülse ist, die einen gewindefreien Innenumfang sowie einen Außenumfang mit Außengewinde (51) aufweist, über das die Anschlaghülse (49) in Gewindeeingriff mit einem Innengewinde (53) des Ausleger-Endes (37) ist, und dass insbesondere das Innengewinde (53) im Schraubloch (43) des Ausleger-Endes (37) ausgebildet ist, und/oder dass insbesondere für eine Hubverstellung die Anschlaghülse (49) schraubbetätigbar ist.

4. Antriebsvorrichtung nach Anspruch 3, **dadurch gekennzeichnet, dass** der Bolzenschaft (45) des Schraubbolzens (41) durch die Anschlaghülse (49) führbar ist, und/oder dass in der Stützstellung (S) eine Stirnseite der Anschlaghülse (49) in Anlage mit einem Öffnungsrandbereich (55) der Innengewindebohrung (47) des Moduls (13) ist, der die Modul-Stützfläche bildet.

5. Antriebsvorrichtung nach Anspruch 3 oder 4, **dadurch gekennzeichnet, dass** im festgespannten Zustand das Ausleger-Ende (37) mitsamt Anschlaghülse (49) zwischen dem Bolzenkopf (57) des Schraubbolzens (41) und dem Öffnungsrandbereich (55) der Innengewindebohrung (47) des Moduls (13) abgestützt ist, und dass insbesondere der Bolzenkopf (57) unmittelbar auf der vom Modul (13) abgewandten Anschlaghülsen-Stirnseite abgestützt ist, oder dass der Bolzenkopf (57) unabhängig von der Anschlaghülse (49) auf dem Öffnungsrandbereich des Schraubloches (59) des Ausleger-Endes (37) abgestützt ist.

6. Antriebsvorrichtung nach einem der Ansprüche 3, 4 oder 5, **dadurch gekennzeichnet, dass** die Anschlaghülse (49) an ihrer von dem Modul (13) abgewandten Stirnseite einen Werkzeugansatz (61) aufweist, über den die Anschlaghülse (49) schraubbetätigbar ist, und dass insbesondere der Werkzeugansatz (61) der Anschlaghülse (49) sowie ein Werkzeugansatz (63) des Schraubbolzens (41) im Wesentlichen gleich sind, so dass die Anschlaghülse (49) und der Schraubbolzen (41) mit gleichem Werkzeug betätigbar sind.

7. Antriebsvorrichtung nach einem der vorhergehenden Ansprüche, **dadurch gekennzeichnet, dass** die Schraubstelle (A) achsparallel zur Elektromaschinen-Achse bzw. zur Modul-Achse ausgerichtet ist, und/oder dass insbesondere zur weiteren Reduzierung von betriebsbedingten Schwingungen das Ausleger-Ende (37) über zumindest eine zweite Schraubstelle (B) mit dem Modul (13) verbindbar ist, deren Schraubachse rechtwinklig zur Schraubachse der ersten Schraubstelle (A) ausgerichtet ist.

8. Antriebsvorrichtung nach Anspruch 7, **dadurch gekennzeichnet, dass** die zweite Schraubstelle (B) einen Schraubbolzen (65) aufweist, der durch ein Schraubloch (67) des Ausleger-Endes (37) führbar ist und mit seinem Bolzenschaft (69) in Gewindeeingriff mit einer modulseitigen Innengewindebohrung (71) bringbar ist.

9. Antriebsvorrichtung nach Anspruch 8, **dadurch gekennzeichnet, dass** in das Schraubloch (67) des Ausleger-Endes (37) eine Ausgleichshülse mit geringem Lochspiel eingesetzt ist, deren Hülsenlänge (I₁) größer bemessen ist als die Schraubloch-Länge (I₂) des Ausleger-Endes (37), und dass insbesondere im festgespannten Zustand die Ausgleichhülse (73) zwischen dem Bolzenkopf (75) und dem Öffnungsrandbereich (77) der modulseitigen Innengewindebohrung (71) abgestützt ist und das Ausleger-Ende (37) in Gleitkontakt mit dem Ausgleichhülsen-Außenumfang in Achsrichtung verstellbar ist, jedoch Querschwingungen quer zur Achsrichtung blockiert sind.

10. Antriebsvorrichtung nach einem der vorhergehenden Ansprüche, **dadurch gekennzeichnet, dass** bei noch demontiertem Modul (13) die Baueinheit einen Montagefreigang (f) zwischen dem Ausleger-Ende (37) und dem Getriebe (7) aufweist, und dass in einem ersten Prozessschritt das Modul (13) störkonturfrei in den Montagefreigang (f) einführbar ist, in einem zweiten Prozessschritt das Modul (13) um einen Zustellhub in Axialrichtung bis in eine Montageposition zustellbar ist, in der die Flanschverbindung (29) zwischen dem Modul (13) und dem Getriebe (7) herstellbar ist, und in einem dritten Prozessschritt das Ausleger-Ende (37) an der Schraubstelle (A, B) mit dem Modul (13) verspannbar ist.

11. Antriebsvorrichtung nach einem der vorhergehenden Ansprüche, **dadurch gekennzeichnet, dass** der Elektromaschine (1) eine Leistungselektronik (31) zugeordnet ist, die insbesondere auf der Oberseite der rahmenförmigen Baueinheit angeordnet ist, und dass der Ausleger (35) ein Kontaktgehäuse (33) für elektrische Versorgungsleitungen aufweist, über die die Leistungselektronik (31) mit der Elektromaschine (1) verbindbar ist.

## Claims

1. Drive device for an electrified vehicle axle of a vehicle, with an electric machine (1) which outputs via a transmission (7) to drive shafts (3, 4) which lead to vehicle wheels of the vehicle axle, and with a coolant and/or lubricant module (13) which supplies the electric machine (1) and/or the transmission (7) with coolant and/or lubricant, the electric machine (1), the transmission (7) and the module (13) being joined together to form one structural unit, in which the electric machine (1) and the coolant/lubricant module (13) are flange-connected to the transmission (7) in a manner which is spaced apart axially from one another, and, on its side which lies axially opposite the transmission (7), the electric machine (1) having a radially protruding cantilever (35) which bridges an axial spacing (Δx) from the coolant/lubricant module (13) and which, at its free cantilever end (37), is attached in a force-transmitting manner via at least one bolt location (A) to the coolant/lubricant module (13), in particular in order to reduce operationally induced vibrations in the structural unit,
**characterized**
**in that**, at the cantilever end (37), a stop element (49) is provided with an adjustable stroke between a non-use position (N) and a supporting position (S), and in that, in particular, the stop element (49) is spaced apart from an opening edge region (55) via a free tolerance gap in the non-use position (N), and in that, in particular, before the bolt location (A) is tensioned fixedly, the stroke of the stop element (49) can be adjusted, using up the tolerance gap, until in contact with the opening edge region (55), with the result that the cantilever end (37) and the module (13) can be braced to one another in a manner which is free from tolerance-induced component deformations.

2. Drive device according to Claim 1, **characterized in that** the bolt location (A) has a threaded bolt (41) which can be guided through a screw hole (43) of the cantilever end (37) and can be brought by way of its bolt shank (45) into threaded engagement with a module-side internally threaded bore (47).

3. Drive device according to Claim 2, **characterized in that** the stop element (49) is a stop sleeve which has a thread-free inner circumference and an outer circumference with an external thread (51), via which the stop sleeve (49) is in threaded engagement with an internal thread (53) of the cantilever end (37), and **in that**, in particular, the internal thread (53) is configured in the screw hole (43) of the cantilever end (37), and/or **in that** the stop sleeve (49) can be actuated by screwing, in particular, for a stroke adjustment.

4. Drive device according to Claim 3, **characterized in that** the bolt shank (45) of the threaded bolt (41) can be guided through the stop sleeve (49), and/or **in that**, in the supporting position (S), an end side of the stop sleeve (49) is in contact with an opening edge region (55) of the internally threaded bore (47) of the module (13), which opening edge region (55) forms the module supporting face.

5. Drive device according to Claim 3 or 4, **characterized in that**, in the fixedly tensioned state, the cantilever end (37) including the stop sleeve (49) is supported between the bolt head (57) of the threaded bolt (41) and the opening edge region (55) of the internally threaded bore (47) of the module (13), and **in that**, in particular, the bolt head (57) is supported directly on the stop sleeve end side which faces away from the module (13), or **in that** the bolt head (57) is supported, independently of the stop sleeve (49), on the opening edge region of the screw hole (59) of the cantilever end (37).

6. Drive device according to one of Claims 3, 4 or 5, **characterized in that** the stop sleeve (49) has, on its end side which faces away from the module (13), a tool attachment (61), via which the stop sleeve (49) can be actuated by screwing, and **in that**, in particular, the tool attachment (61) of the stop sleeve (49) and a tool attachment (63) of the threaded bolt (41) are substantially identical, with the result that the stop sleeve (49) and the threaded bolt (41) can be actuated by way of an identical tool.

7. Drive device according to one of the preceding claims, **characterized in that** the bolt location (A) is oriented axially parallel to the electric machine axis or to the module axis, and/or **in that**, in particular for the further reduction of operationally induced vibrations, the cantilever end (37) can be connected via at least one second bolt location (B) to the module (13), the screw axis of which is oriented at a right angle with respect to the screw axis of the first bolt location (A).

8. Drive device according to Claim 7, **characterized in that** the second bolt location (B) has a threaded bolt (65) which can be guided through a screw hole (67) of the cantilever end (37) and can be brought by way of its bolt shank (69) into threaded engagement with a module-side internally threaded bore (71).

9. Drive device according to Claim 8, **characterized in that** an adjusting sleeve with a small hole tolerance is inserted into the screw hole (67) of the cantilever end (37), the sleeve length (11) of which adjusting sleeve is of greater dimensions than the screw hole length (12) of the cantilever end (37), and **in that**, in particular in the fixedly tensioned state, the adjusting sleeve (73) is supported between the bolt head (75) and the opening edge region (77) of the module-side internally threaded bore (71), and the cantilever end (37) can be adjusted in the axial direction in sliding contact with the adjusting sleeve outer circumference, but lateral vibrations transversely with respect to the axial direction are blocked.

10. Drive device according to one of the preceding claims, **characterized in that**, in the case of a module (13) which is still dismantled, the structural unit has an assembly clearance (f) between the cantilever end (37) and the transmission (7), and **in that**, in a first process step, the module (13) can be introduced without interfering contours into the assembly clearance (f), in a second process step, the module (13) can be advanced in the axial direction by an advancing stroke as far as into an assembly position, in which the flange connection (29) can be established between the module (13) and the transmission (7), and, in a third process step, the cantilever end (37) can be braced to the module (13) at the bolt location (A, B).

11. Drive device according to one of the preceding claims, **characterized in that** the electric machine (1) is assigned an electronic power system (31) which is arranged, in particular, on the upper side of the frame-shaped structural unit, and **in that** the cantilever (35) has a contact housing (33) for electric supply lines, via which the electronic power system (31) can be connected to the electric machine (1).

## Revendications

1. Dispositif d'entraînement pour un essieu de véhicule électrifié d'un véhicule, avec une machine électrique (1) qui délivre en sortie, par l'intermédiaire d'une transmission (7), à des arbres d'entraînement (3, 4) qui mènent à des roues de véhicule de l'essieu de véhicule, et avec un module de réfrigérant et/ou de lubrifiant (13) qui alimente la machine électrique (1) et/ou la transmission (7) en réfrigérant et/ou lubrifiant, la machine électrique (1), la transmission (7) et le module (13) étant assemblés en une unité de construction dans laquelle la machine électrique (1) et le module de réfrigérant/lubrifiant (13) sont bridés à la transmission (7) à une distance axiale l'un de l'autre, et la machine électrique (1) présentant, sur son côté axialement opposé à la transmission (7), un bras (35) faisant saillie radialement, qui couvre une distance axiale (Δx) par rapport au module de réfrigérant/lubrifiant (13) et qui est relié au niveau de son extrémité de bras libre (37) au module de réfrigérant/lubrifiant (13) de manière à transmettre une force par l'intermédiaire d'au moins un point de vissage (A), notamment afin de réduire les vibrations dues au fonctionnement dans l'unité de construction,
**caractérisé en ce**
**qu'**un élément de butée (49) réglable en course entre une position de non-utilisation (N) et une position d'appui (S) est prévu à l'extrémité de bras (37), et en ce que, notamment, l'élément de butée (49), dans la position de non-utilisation (N), est espacé d'une zone de bord d'ouverture (55) par l'intermédiaire d'un intervalle de tolérance libre, et en ce que, notamment, avant le serrage du point de vissage (A), l'élément de butée (49) est réglé en course en utilisant l'intervalle de tolérance jusqu'à ce qu'il s'applique contre la zone de bord d'ouverture (55), de telle sorte que l'extrémité de bras (37) et le module (13) peuvent être serrés l'un contre l'autre sans déformations de composants dues à la tolérance.

2. Dispositif d'entraînement selon la revendication 1, **caractérisé en ce que** le point de vissage (A) présente un boulon de vis (41) qui peut être guidé à travers un trou de vis (43) de l'extrémité de bras (37) et qui peut être amené par sa tige de boulon (45) en prise par filetage avec un alésage fileté intérieur (47) côté module.

3. Dispositif d'entraînement selon la revendication 2, **caractérisé en ce que** l'élément de butée (49) est une douille de butée qui présente une périphérie intérieure exempte de filetage ainsi qu'une périphérie extérieure avec un filetage extérieur (51), par l'intermédiaire duquel la douille de butée (49) est en prise par filetage avec un filetage intérieur (53) de l'extrémité de bras (37), et **en ce que**, notamment, le filetage intérieur (53) est réalisé dans le trou de vis (43) de l'extrémité de bras (37), et/ou **en ce que**, notamment, pour un réglage en course, la douille de butée (49) peut être actionnée par vissage.

4. Dispositif d'entraînement selon la revendication 3, **caractérisé en ce que** la tige de boulon (45) du boulon de vis (41) peut être guidée à travers la douille de butée (49) et/ou **en ce que**, dans la position d'appui (S), un côté frontal de la douille de butée (49) est appliqué contre une zone de bord d'ouverture (55) de l'alésage fileté intérieur (47) du module (13), qui forme la surface d'appui du module.

5. Dispositif d'entraînement selon la revendication 3 ou 4, **caractérisé en ce qu'**à l'état serré, l'extrémité de bras (37) avec la douille de butée (49) s'appuie entre la tête de boulon (57) du boulon de vis (41) et la zone de bord d'ouverture (55) de l'alésage fileté intérieur (47) du module (13), et **en ce que**, notamment, la tête de boulon (57) s'appuie directement sur le côté frontal de la douille de butée détourné du module (13), ou **en ce que** la tête de boulon (57) s'appuie sur la zone de bord d'ouverture du trou de vis (59) de l'extrémité de bras (37) indépendamment de la douille de butée (49).

6. Dispositif d'entraînement selon l'une quelconque des revendications 3, 4 ou 5, **caractérisé en ce que** la douille de butée (49) présente, sur son côté frontal détourné du module (13), un embout d'outil (61) par l'intermédiaire duquel la douille de butée (49) peut être actionnée par vissage, et **en ce que**, notamment, l'embout d'outil (61) de la douille de butée (49) ainsi qu'un embout d'outil (63) du boulon de vis (41) sont essentiellement identiques, de telle sorte que la douille de butée (49) et le boulon de vis (41) peuvent être actionnés avec le même outil.

7. Dispositif d'entraînement selon l'une quelconque des revendications précédentes, **caractérisé en ce que** le point de vissage (A) est orienté en parallélisme axial avec l'axe de la machine électrique ou avec l'axe du module, et/ou **en ce que**, notamment pour réduire encore les vibrations dues au fonctionnement, l'extrémité de bras (37) peut être reliée au module (13) par l'intermédiaire d'au moins un deuxième point de vissage (B) dont l'axe de vissage est orienté à angle droit de l'axe de vissage du premier point de vissage (A).

8. Dispositif d'entraînement selon la revendication 7, **caractérisé en ce que** le deuxième point de vissage (B) présente un boulon de vis (65) qui peut être guidé à travers un trou de vis (67) de l'extrémité de bras (37) et qui peut être amené par sa tige de boulon (69) en prise par filetage avec un alésage fileté intérieur (71) côté module.

9. Dispositif d'entraînement selon la revendication 8, **caractérisé en ce que** dans le trou de vis (67) de l'extrémité de bras (37) est insérée une douille de compensation avec un faible jeu de trou, dont la longueur de douille (I₁) est supérieure à la longueur de trou de vis (I₂) de l'extrémité de bras (37), et **en ce que**, notamment à l'état serré, la douille de compensation (73) s'appuie entre la tête de boulon (75) et la zone de bord d'ouverture (77) de l'alésage fileté intérieur (71) côté module et l'extrémité de bras (37) est réglable dans la direction axiale en contact glissant avec la périphérie extérieure de la douille de compensation, mais que les vibrations transversales sont bloquées transversalement à la direction axiale.

10. Dispositif d'entraînement selon l'une quelconque des revendications précédentes, **caractérisé en ce que,** lorsque le module (13) est encore démonté, l'unité de construction présente un dégagement de montage (f) entre l'extrémité de bras (37) et la transmission (7), et **en ce que**, dans une première étape de processus, le module (13) peut être introduit sans contour gênant dans le dégagement de montage (f), dans une deuxième étape de processus, le module (13) peut être avancé d'une course d'avancement dans la direction axiale jusqu'à une position de montage dans laquelle la liaison par bride (29) peut être établie entre le module (13) et la transmission (7), et dans une troisième étape de processus, l'extrémité de bras (37) peut être serrée avec le module (13) au niveau du point de vissage (A, B).

11. Dispositif d'entraînement selon l'une quelconque des revendications précédentes, **caractérisé en ce qu'**une électronique de puissance (31) est associée à la machine électrique (1), laquelle est agencée notamment sur le côté supérieur de l'unité de construction en forme de cadre, et **en ce que** le bras (35) présente un boîtier de contact (33) pour des lignes d'alimentation électrique, par l'intermédiaire desquelles l'électronique de puissance (31) peut être reliée à la machine électrique (1).
